# EUROPEAN PATENT SPECIFICATION

(11) **EP 3 116 046 B1**
(45) Date of publication and mention of the grant of the patent: **12.02.2020**
(21) Application number: 15758692.6
(22) Date of filing: 23.02.2015
(51) Int. Cl.: H01M 2/10, H01M 2/20, H01M 10/48

(54) **CONNECTION MEMBER AND ELECTRICITY STORAGE MODULE**
VERBINDUNGSELEMENT UND ELEKTRIZITÄTSSPEICHERMODUL
ÉLÉMENT DE CONNEXION ET MODULE DE STOCKAGE D'ÉLECTRICITÉ

(30) Priority: 04.03.2014 JP 2014041431
(43) Date of publication of application: 11.01.2017
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: SHIMIZU Hiroshi, Yokkaichi-shi Mie 510-8503 (JP); HIRAMITSU Hiroomi, Yokkaichi-shi Mie 510-8503 (JP)
(74) Representative: Müller-Boré & Partner Patentanwälte PartG mbB
(86) International application number: PCT/JP2015/054982
(87) International publication number: WO 2015/133308

(56) References cited:
- EP-A2- 2 538 230
- WO-A1-2008/050952
- JP-A- 2007 073 510
- JP-A- 2010 519 676
- JP-A- 2012 123 980
- JP-A- 2012 134 016
- JP-A- 2012 138 268
- JP-A- 2013 037 914
- JP-A- 2013 140 698
- JP-A- 2013 525 945
- US-A1- 2013 045 401

## Description

### Technical Field

The present invention relates to a connection member and an electricity storage module.

### Background Art

In a battery module for electric vehicle or hybrid vehicle, a plurality of unit cells each having positive and negative electrode terminals are arranged side by side. In such a battery module, the plurality of unit cells are connected in series and/or parallel by connecting the electrode terminals of adjacent unit cells by busbars.

Here, in the case of connecting the plurality of unit cells in series and/or parallel, there is a problem of causing the degradation of the cells if cell characteristics such as a cell voltage and a cell temperature are non-uniform among the unit cells.

Accordingly, detection terminals for detecting the voltages, the temperatures and the like of the unit cells are connected in a battery module for vehicle (see, for example, patent literature 1).

### Citation List

### Patent Literature

### Patent Literature 1:

Japanese Unexamined Patent Publication No. 2013-54996

US 2013/045401 A1 discloses a battery pack having a battery cell and a case accommodating the battery cell and including a terminal portion that is electrically connected to the battery cell.

EP 2 538 230 A2 discloses a voltage sensing assembly for a battery module to sense voltage of battery cells having electrode terminals formed at the upper end or the lower end thereof in a state in which the voltage sensing assembly is mounted in the battery module.

WO 2008/050952 A1 discloses an electrode terminal connecting member for electrically interconnecting plate-shaped secondary battery cells.

### Summary of the Invention

### Technical Problem

In the battery module described in the above patent literature 1, the detection terminals are placed on busbars after the busbars for connecting the electrode terminals of the unit cells are arranged between the electrode terminals, and are connected to the busbars and the electrode terminals by a method such as bolting.

Since the number of connection of the detection terminals increases as the number of the unit cells constituting the battery module increases, there has been a problem that a connecting operation becomes cumbersome.

The present invention was developed to solve the above problem and aims to provide an electricity storage module with a simplified connecting operation of a detection terminal.

### Solution to Problem

The present invention is directed to a connection member according to claim 1.

Further, the present invention is directed to an electricity storage module according to claim 4.

In the present invention, since the connection member for electrically connecting the lead terminals of the electricity storage elements adjacent in the lamination direction is provided with the detection terminal portion for detecting the state of the electricity storage element, the connection of the lead terminals and the connection of the detection terminal portion are completed by connecting the connection member between the lead terminals. As a result, according to the present invention, it is possible to provide an electricity storage module with a simplified connecting operation of a detection terminal.

Furthermore, when one terminal connecting portion and the lead terminal are joined, for example, by welding, there is no influence of heat generated by welding on the other terminal connecting portion and no alloy phase is formed even if the two terminal connecting portions are made of different metals.

The present invention can also be configured as follows.

The detection terminal portion separate from the terminal connecting portion is mounted on the connection member.

According to this configuration, the terminal connecting portion and the detection terminal portion can be made of different materials.

The connection member may be such that a part to be held in contact with the lead terminal is made of the same metal material as the lead terminal.

According to this configuration, various welding methods can be adopted as a method for connecting the lead terminal and the connection member and, in addition, electrical connection reliability can be enhanced by suppressing the occurrence of electrolytic corrosion in a connecting part of the lead terminal and the connection member.

The electricity storage module may include a holding member mounted on one side edge of the electricity storage element for holding the connection member, and the holding member may be provided with a terminal accommodating portion for accommodating the detection terminal portion.

According to this configuration, the detection terminal portion is insulation-protected by the terminal accommodating portion of the holding member and it is sufficient to fit a mating terminal for connection to an external device into the detection terminal portion accommodated in the terminal accommodating portion. Thus, a connecting operation of the detection terminal portion and the external device can also be simplified.

### Effect of the Invention

According to the present invention, it is possible to provide an electricity storage module with a simplified connecting operation of a detection terminal.

### Brief Description of the Drawings

FIG. 1 is a perspective view of an electricity storage module of one embodiment,
FIG. 2 is a perspective view of the electricity storage module with a connector housing removed,
FIG. 3 is a perspective view of the electricity storage module with a holding member cover removed,
FIG. 4 is a perspective view of a laminated body,
FIG. 5 is a partial perspective view of the laminated body,
FIG. 6 is a partial section of the laminated body,
FIG. 7 is a perspective view of an electricity storage element group,
FIG. 8 is a perspective view of an electricity storage element,
FIG. 9 is a perspective view of a holding member with an external connection member in a lowermost stage,
FIG. 10 is a plan view of the holding member in the lowermost stage,
FIG. 11 is a perspective view of the external connection member (lowermost stage),
FIG. 12 is a perspective view showing a state where a connection member is arranged between the electricity storage elements,
FIG. 13 is a plan view showing the state where the connection member is arranged between the electricity storage elements,
FIG. 14 is a perspective view of a holding member with a connection member in a second lowest stage,
FIG. 15 is a plan view of a holding member in a middle stage (second or third lowest stage),
FIG. 16 is a perspective view of a connection member in the second lowest stage,
FIG. 17 is a plan view of the connection member in the second lowest stage,
FIG. 18 is a perspective view showing a state where a detection terminal portion is mounted on a terminal connecting portion on the connection member in the second lowest stage,
FIG. 19 is a perspective view of the terminal connecting portion of the connection member in the second lowest stage,
FIG. 20 is a plan view of the terminal connecting portion of the connection member in the second lowest stage,
FIG. 21 is a perspective view of a holding member with a connection member in the third lowest stage,
FIG. 22 is a perspective view of the connection member in the third lowest stage,
FIG. 23 is a plan view of the connection member in the third lowest stage,
FIG. 24 is a perspective view showing a state where a detection terminal portion is mounted on a terminal connecting portion on the connection member in the third lowest stage,
FIG. 25 is a perspective view of the terminal connecting portion of the connection member in the second lowest stage,
FIG. 26 is a plan view of the terminal connecting portion in the second lowest stage,
FIG. 27 is a partial perspective view of a holding member with an external connection member in an uppermost stage,
FIG. 28 is a perspective view of the holding member in the uppermost stage,
FIG. 29 is a perspective view of the external connection member (uppermost stage),
FIG. 30 is a perspective view showing an electricity storage unit formed by mounting the external connection member and the electricity storage element on the holding member in the lowermost stage,
FIG. 31 is a perspective view showing a state where the holding member with the connection member in the second lowest stage is laminated on the electricity storage unit in the lowermost stage,
FIG. 32 is a perspective view showing a state where two stages of electricity storage units are laminated by mounting the electricity storage element on the holding member in the second lowest stage,
FIG. 33 is a perspective view showing a state where the holding member with the connection member in the third lowest stage is laminated on the electricity storage unit in the second lowest stage,
FIG. 34 is a perspective view showing a state where three stages of electricity storage elements are laminated by mounting the electricity storage element on the holding member in the third lowest stage, and
FIG. 35 is a perspective view showing a state where the holding member with the external connection member in the uppermost stage is laminated on the electricity storage unit in the third lowest stage.

### Embodiment of the Invention

### <Embodiment>

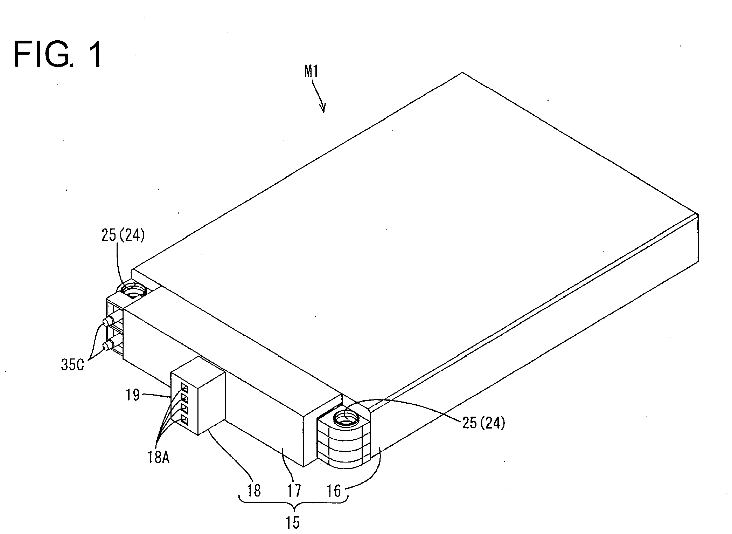

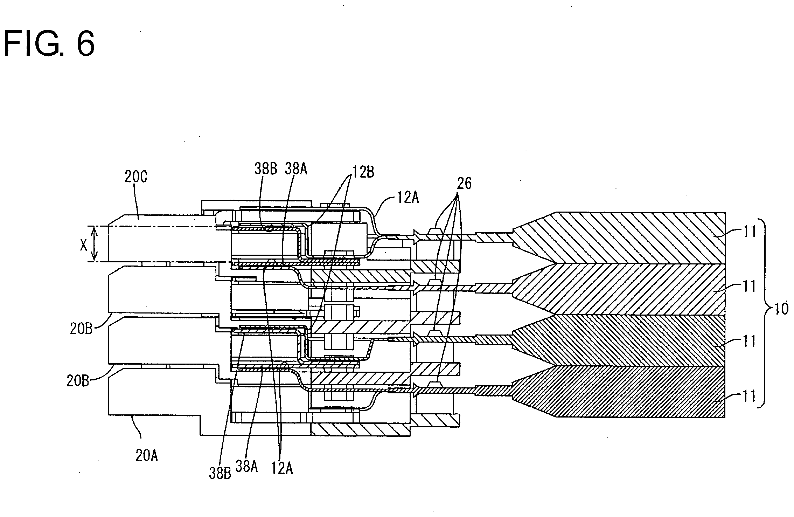

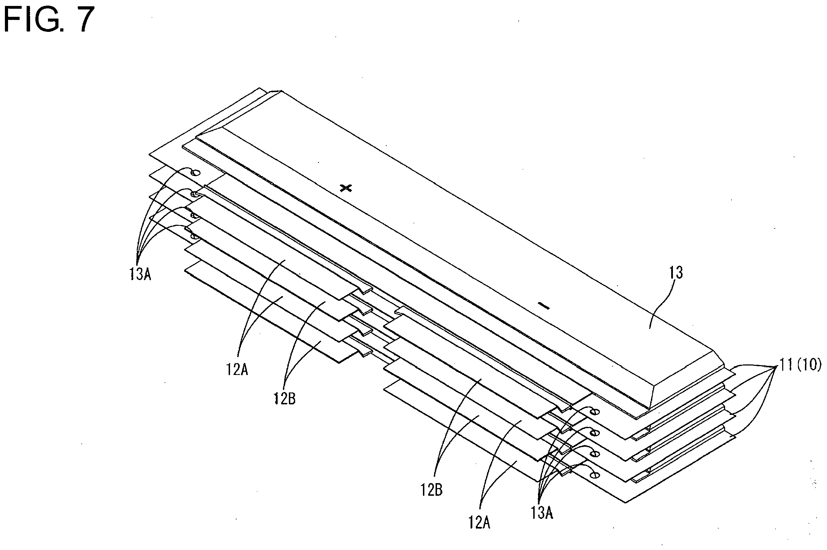

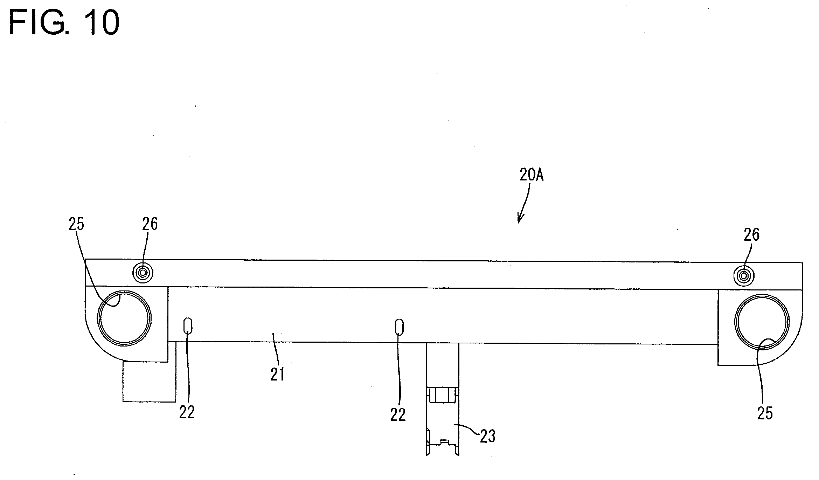

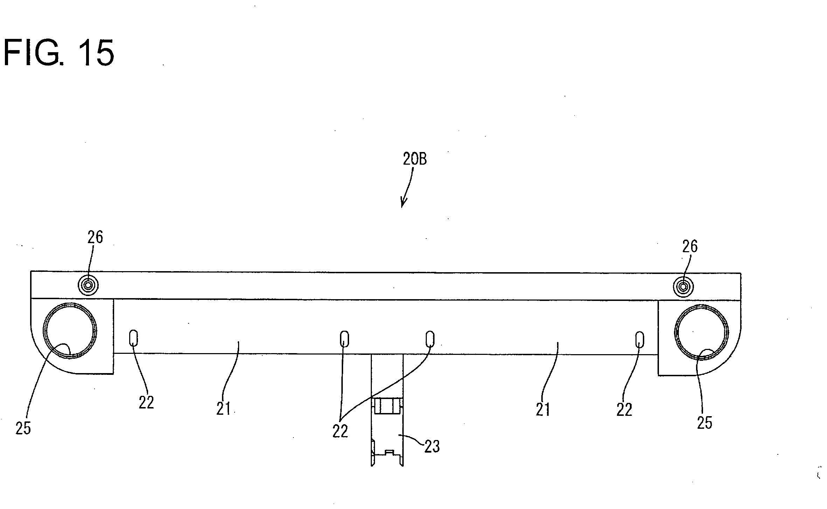

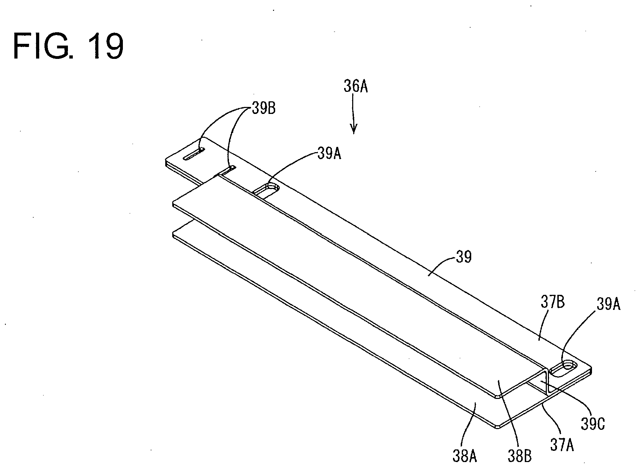

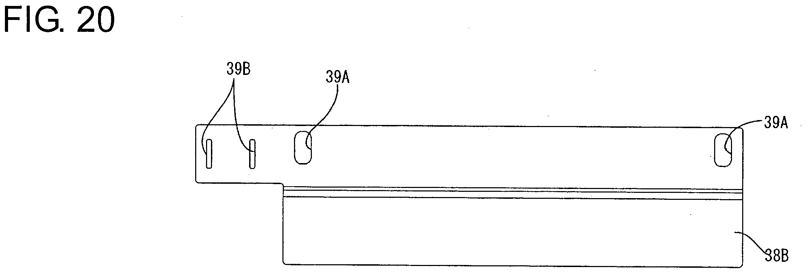

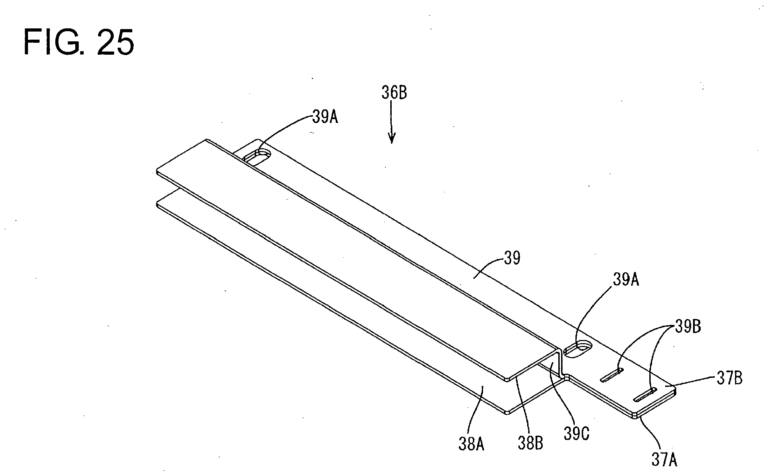

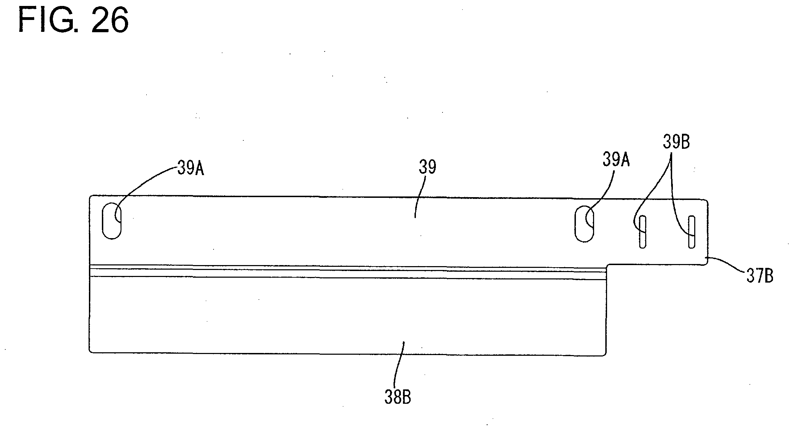

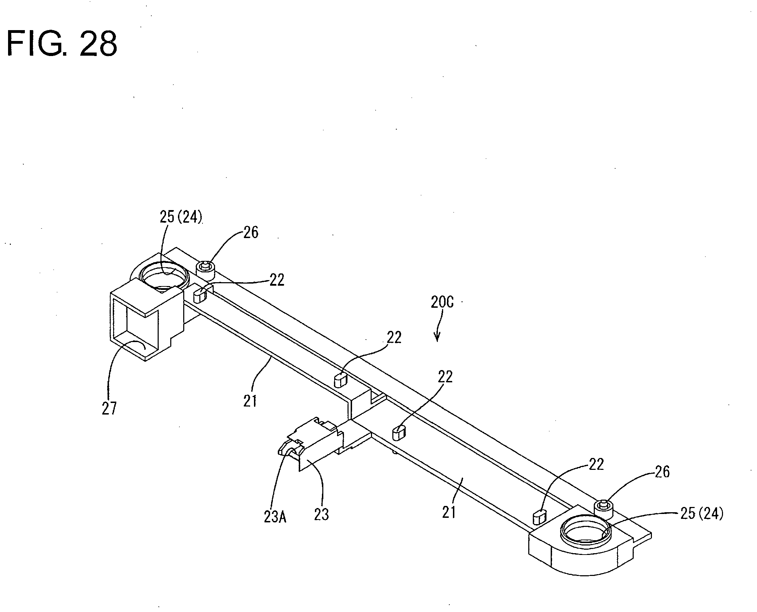

An electricity storage module M1 with connection members 36 of one embodiment according to the present invention is described with reference to FIGS. 1 to 35. In the following description, a left lower side and a right upper side in FIG. 1 are referred to as a front side and a rear side, and an upper side and a lower side of FIG. 6 are referred to as an upper side and a lower side. For a plurality of same members, one member is denoted by a reference sign and the other members are not denoted by the reference sign in some cases. The electricity storage module M1 of this embodiment is used, for example, for an integrated starter generator (ISG).

### (Electricity Storage Module M1)

The electricity storage module M1 has a rectangular parallelepiped shape and includes an electricity storage element group 10 formed by laminating a plurality of electricity storage elements 11, connection members 36 for connecting lead terminals 12A, 12B of the electricity storage elements 11 adjacent in a lamination direction and holding members 20 for holding the connection members 36. Further, the electricity storage module M1 includes a case 15 for accommodating the electricity storage element group 10, the connection members 36 and the holding members 20.

### (Case 15)

The case 15 includes a case main body 16 configured to accommodate the electricity storage element group 10 and having an open front side, a holding member cover 17 for covering the holding members 20 arranged at an outer side of an opening of the case main body 16 and a housing 18 mounted on the holding member cover 17.

The holding member cover 17 covers parts except external connection terminals 35C and fixing portions 24 and terminal accommodating portions 23 formed on the holding members 20.

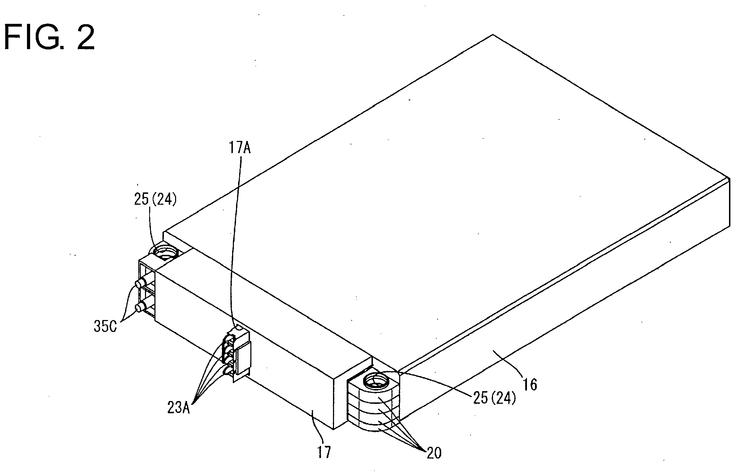

As shown in FIG. 2, an insertion portion 17A through which the terminal accommodating portions 23 provided on the holding members 20 are insertable is provided in a center of the holding member cover 17. As shown in FIG. 1, the housing 18 for accommodating the terminal accommodating portions 23 inside is mounted on the insertion portion 17A provided on the holding member cover 17.

The terminal accommodating portions 23, the housing 18 and detection terminal portions 50 to be accommodated into the terminal accommodating portions 23 constitute a connector 19. As shown in FIG. 1, the housing 18 is provided with terminal insertion openings 18A through which terminals for connection to a device such as a battery control unit (not shown, hereinafter referred to as "mating terminals") are insertable.

### (Electricity Storage Element Group 10)

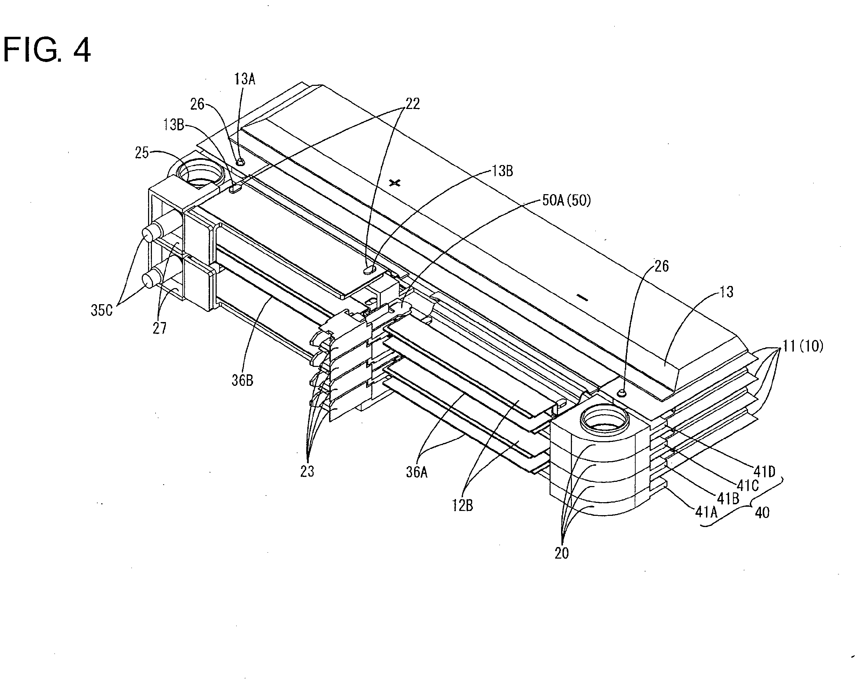

As shown in FIGS. 4 to 7, the electricity storage element group 10 is formed by laminating a plurality of electricity storage elements 11 (four electricity storage elements 11 in this embodiment). In this embodiment, the electricity storage element group 10 is formed such that the electricity storage elements 11 adjacent in the lamination direction are laminated to arrange the lead terminals 12A, 12B having different polarities at overlapping positions and are connected in series.

### (Electricity Storage Element 11)

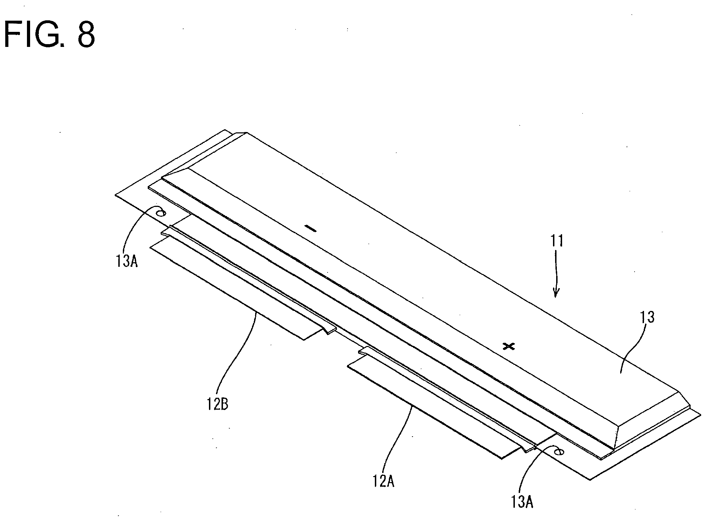

As shown in FIG. 8, each electricity storage element 11 includes a positive-electrode and a negative electrode lead terminals 12A, 12B on one side edge. Specifically, each electricity storage element 11 includes an unillustrated electricity storage part, a container 13 made of a laminate film, enclosing the electricity storage part and having welded side edges, and the lead terminals 12A, 12B connected to the electricity storage part and drawn out in an outward direction from one welded side edge of the laminate film.

In this embodiment, the positive-electrode lead terminal 12A is made of aluminum or aluminum alloy and the negative-electrode lead terminal 12B is made of copper or copper alloy.

The lead terminals 12A, 12B, having different polarities, of the electricity storage elements 11 adjacent in the lamination direction are connected via the connection member 36. Note that the positive-electrode lead terminal 12A of the electricity storage element 11 in an uppermost stage and a negative-electrode lead terminal 12B of the electricity storage element 11 in a lowermost stage are respectively connected to external connection members 31 to be connected to an external device (not shown). The lead terminals 12A, 12B electrically connected to the adjacent electricity storage elements 11 are respectively connected to the connection member 36 by welding.

One side edge of the electricity storage element 11 is mounted on the holding member 20. Specifically, two circular mounting holes 13A are formed on one side edge of the electricity storage element 11 formed with the lead terminals 12A, 12B as shown in FIG. 8, and the electricity storage element 11 is mounted on the holding member 20 by fitting mounting protrusions 26 provided on the holding member 20 into these mounting holes 13A. Further, the lead terminals 12A, 12B are formed with holding holes 13B for receiving holding projections 22 of the holding member 20.

### (Holding Member 20)

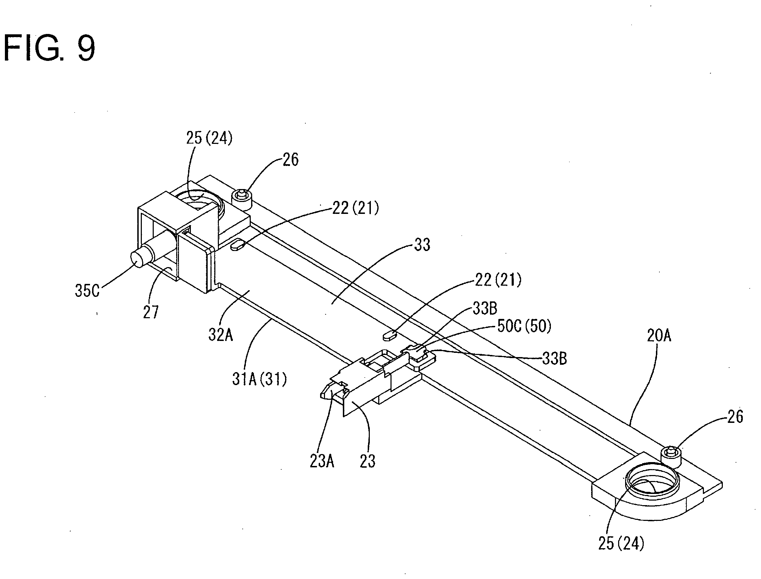

The holding member 20 is provided with a connection member holding portion 21 for holding at least one of the connection member 36 and the external connection member 31. The holding protrusions 22 to be fitted into two holding holds 39A provided on the connection member 36 or two holding holes 33A provided on the connection member 36 are formed to project on the connection member holding portion 21 as shown in FIGS. 9, 14 and 21. The holding protrusions 22 are also fitted into the holding holes 13B of the lead terminal 12A, 12B placed on the external connection member 31 or the connection member 36.

The terminal accommodating portion 23 for accommodating the detection terminal portion 50 mounted on the connection member 36 (36A, 36B) or the detection terminal portion 50 mounted on the external connection member 31 (31A) is formed substantially in a central part of each holding member 20. The terminal accommodating portion 23 includes an opening 23A on a front side, and the mating terminal inserted through the terminal insertion opening 18A of the housing 18 is inserted into the terminal accommodating portion 23 through the opening 23A of the terminal accommodating portion 23.

The fixing portions 24 each formed with a circular through hole 25 are provided on opposite end parts of the holding member 20 in a longitudinal direction. The through holes 25 of the holding members 20 form holes when four holding members 20 are laminated, and fixing members (not shown) are inserted into these holes. Further, the mounting protrusions 26 for mounting the electricity storage element 11 are provided to project upward on the opposite end parts of the holding member 20 in the longitudinal direction. The mounting protrusions 26 formed on the holding member 20 are fitted into the mounting holes 13A provided on the electricity storage element 11, whereby the electricity storage element 11 is fixed.

In this embodiment, three types of the holding members 20 different in shape are used. Specifically, a first holding member 20A arranged in the lowermost stage, second holding members 20B arranged in second and third lowest stages and a third holding member 20C arranged in the uppermost stage are used.

### (First Holding Member 20A)

As shown in FIGS. 9, 10 and 30, the first holding member 20A is provided with the connection member holding portion 21 for holding the external connection member 31A on a shown left side. As shown in FIG. 9, the first holding member 20A is provided with a rectangular terminal holding portion 27 in which the external connection terminal 35C provided on the external connection member 31A is to be arranged.

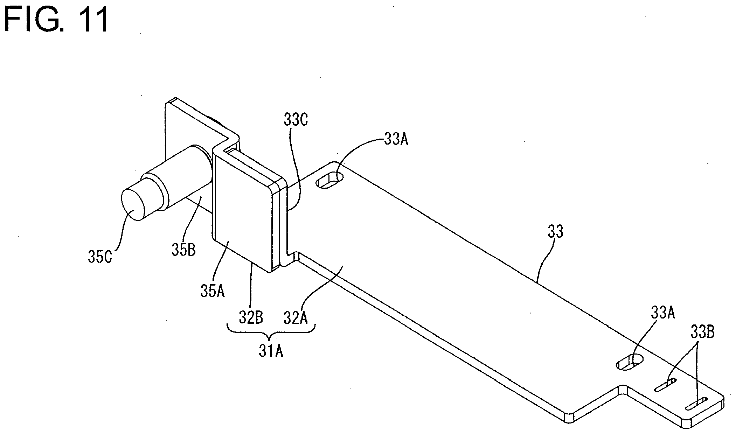

The external connection member 31A to be mounted on the first holding member 20A functions as a negative electrode of the electricity storage module M1. The external connection member 31A functioning as a negative electrode is made of the same material (copper or copper alloy) as the negative-electrode lead terminal 12B. The external connection member 31A is formed by joining an L-shaped first metal member 32A and a second metal member 32B formed to be stepped as shown in FIG. 11.

As shown in FIG. 9, the detection terminal portion 50 for detecting a state of the electricity storage module in the lowermost stage is mounted in terminal connection holes 33B of the first metal member 32A of the external connection member 31A. The (separate) detection terminal portion 50 (50C) mounted on the external connection member 31A is configured similarly to the detection terminal portion 50B mounted on the second connection member 36B. The detection terminal portion 50C is described in detail later.

The first and second metal members 32A, 32B constituting the external connection member 31A are both made of copper or copper alloy. As shown in FIG. 11, the first metal member 32A includes a held portion 33 in the form of a flat plate, held on the holding member 20 and connected to the negative-electrode lead terminal 12B of the electricity storage element 11, and a wall portion 33C connected to the held portion 33 and erected substantially perpendicularly to the held portion 33. The second metal member 32B includes a joint portion 35A to be joined to the wall portion 33C and a terminal portion 35B formed with the external connection terminal 35C in the form of a bolt. The external connection terminal 35C is a terminal to be electrically connected to the external device.

The two holding holes 33A for receiving the holding protrusions 22 of the first holding member 20A and the terminal connection holes 33B into which the detection terminal portion 50 is to be mounted are provided to penetrate through the held portion 33 of the external connection member 31A.

### (Second Holding Member 20B)

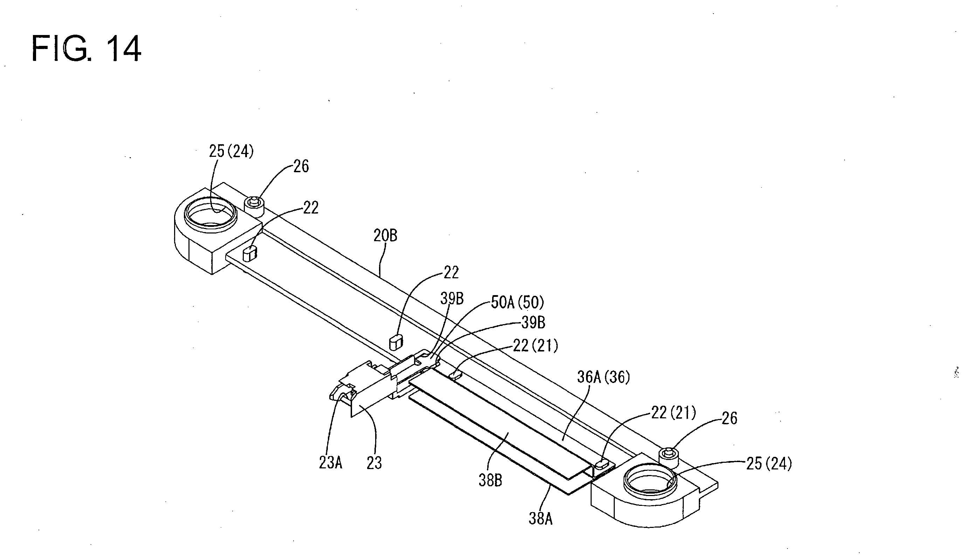

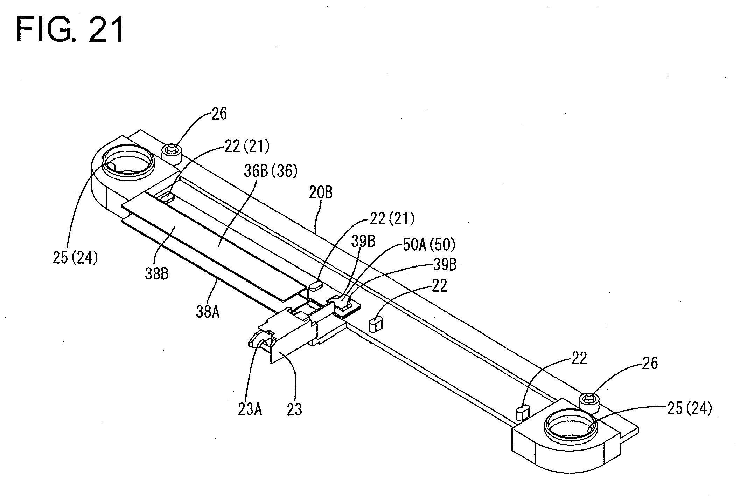

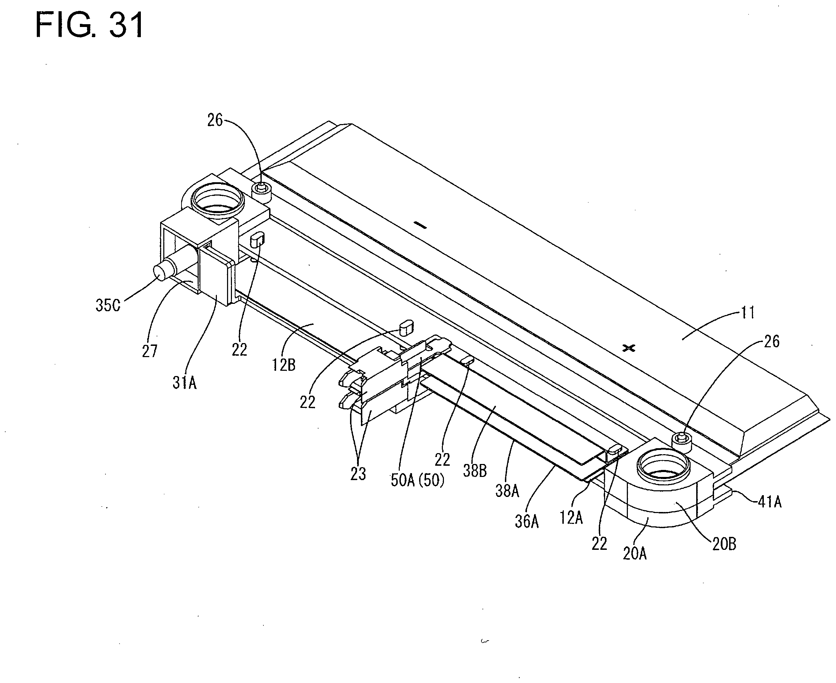

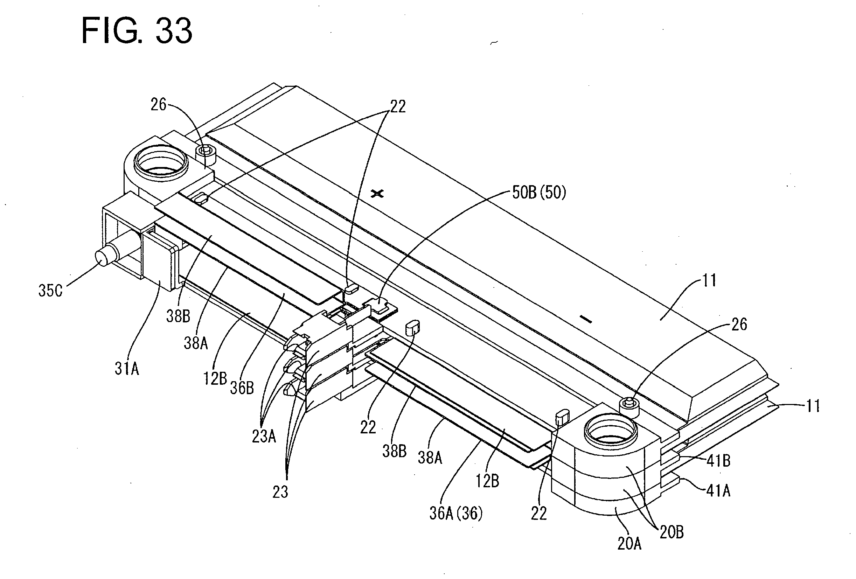

As shown in FIGS. 14, 15 and 21, each second holding member 20B is provided with two connection member holding portions 21 for holding the connection member 36. On the second holding member 20B arranged in the second lowest stage, the connection member 36 (36A) is held on the connection member holding portion 21 on a shown right side as shown in FIGS. 14 and 31. Further, on the second holding member 20B arranged in the third lowest stage, the connection member 36 (36B) is held on the connection member holding portion 21 on a shown left side as shown in FIGS. 21 and 33. The connection member holding portion 21 is formed with holding protrusions 22.

### (Connection Member 36)

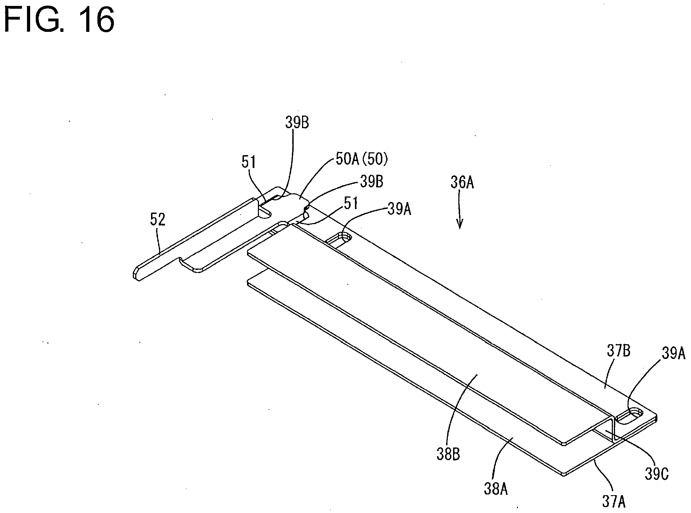

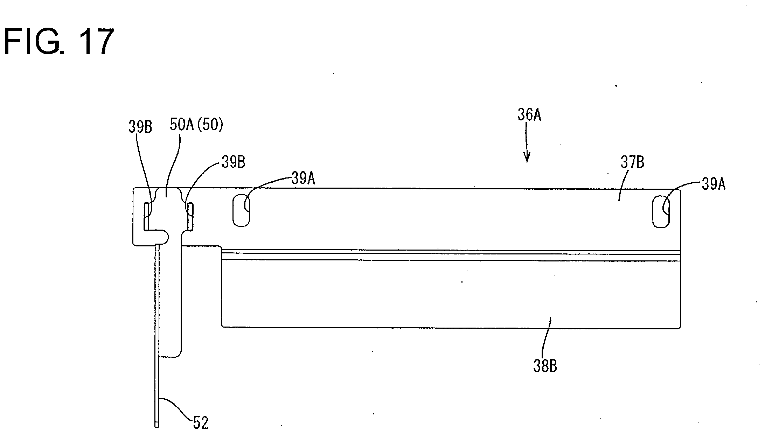

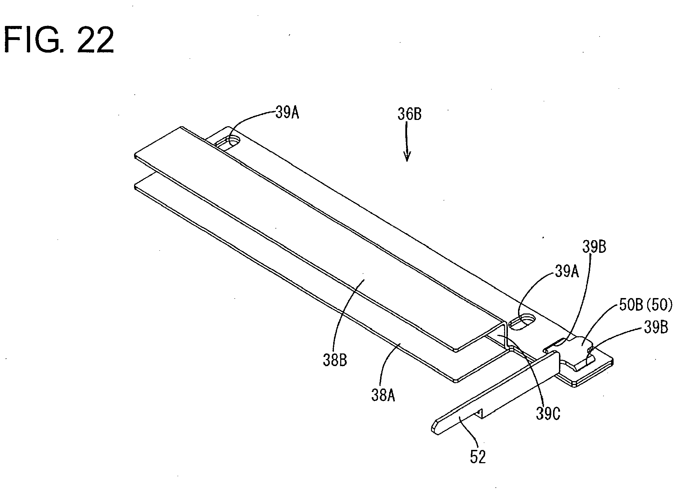

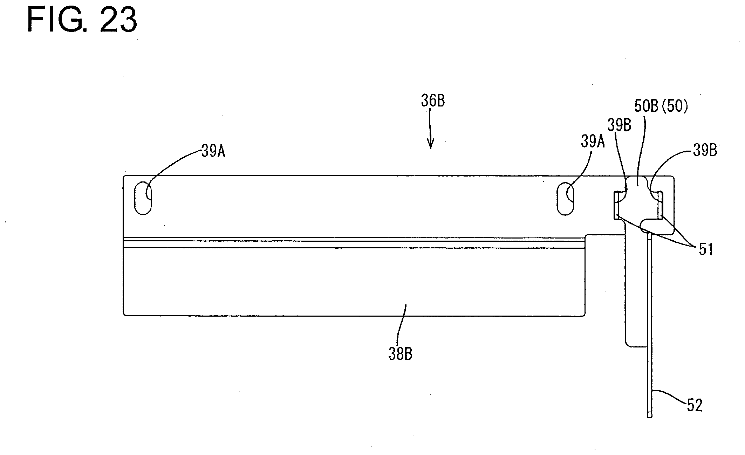

Here, the connection member 36 to be held on the second holding member 20B arranged in the second lowest stage is referred to as a first connection member 36A (FIGS. 16 and 17) and the connection member 36 to be held on the second holding member 20B arranged in the third lowest stage is referred to as a second connection member 36B (FIGS. 22 and 23). Each connection member 36A, 36B (first and second connection members 36A, 36B) includes U-shaped terminal connecting portions 38A, 38B to be connected to the lead terminals 12A, 12B of the electricity storage element 11 on a front side and a held portion 39 in the form of a flat plate to be held on the second holding member 20B on a rear side.

Further, each connection member 36A, 36B is formed by joining two metal members (first metal member 37A, second metal member 37B). The first metal member 37A arranged below out of the two metal members 37A, 37B is in the form of a flat plate. The first metal member 37A includes the held portion 38 formed with two holding holes 39A and two terminal connection holes 39B and the terminal connecting portion 38A to which the lead terminal 12A of the electricity storage element 11 to be arranged below is to be connected.

The second metal member 37B arranged above includes the held portion 39 formed with two holding holes 39A and two terminal connection holes 39B, an erected wall 39C connected to the held portion 39 and erected substantially perpendicularly to the held portion 39, and the terminal connecting portion 38B which is bent substantially perpendicularly to the erected wall 39C and to which the lead terminal 12B of the electricity storage element 11 to be arranged above is to be connected.

On each connection member 36A, 36B, two terminal connecting portions 38A, 38B respectively connected to the lead terminals 12A, 12B adjacent in the lamination direction are separated by a height X (see FIG. 6) of the erected wall 39. Thus, in laser-welding the terminal connecting portion 38A and the lead terminal 12A, there is no influence of laser heat on the terminal connecting portion 38B and no alloy phase of the terminal connecting portions 38A, 38B is formed. Similarly, in laser-welding the terminal connecting portion 38B and the lead terminal 12B, there is no influence of laser heat on the terminal connecting portion 38A and no alloy phase of the terminal connecting portions 38A, 38B is formed.

In this embodiment, the first metal member 37A constituting each connection member 36A, 36B is made of the same material (aluminum or aluminum alloy) as the positive-electrode lead terminal 12A and the second metal member 37B is made of the same material (copper or copper alloy) as the negative-electrode lead terminal 12B. Thus, out of the two terminal connecting portions 38A, 38B of each connection member 36A, 36B, the lower terminal connecting portion 38A is made of aluminum or aluminum alloy and the upper terminal connecting portion 38B is made of copper or copper alloy.

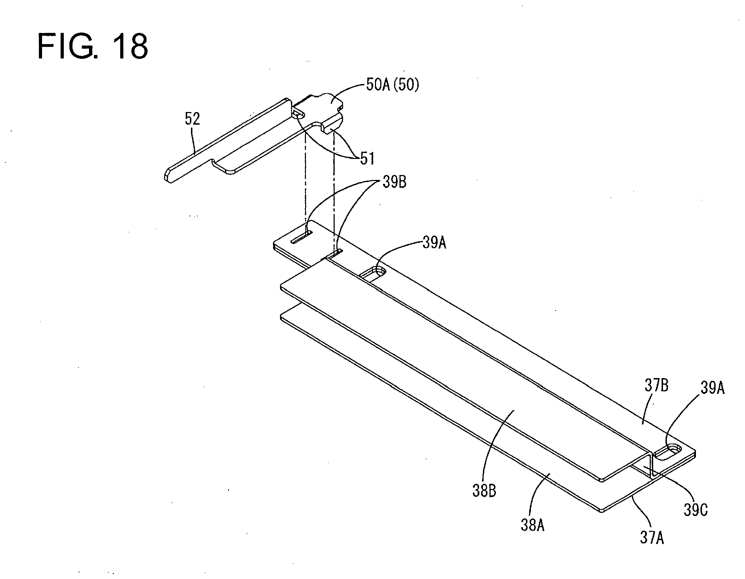

The held portion 39 of the first metal member 37A and that of the second metal member 37B overlap in the entire area and the two holding holes 39A and the two terminal connection holes 39B also respectively overlap each other (see FIGS. 18 to 20 and FIGS. 24 to 26).

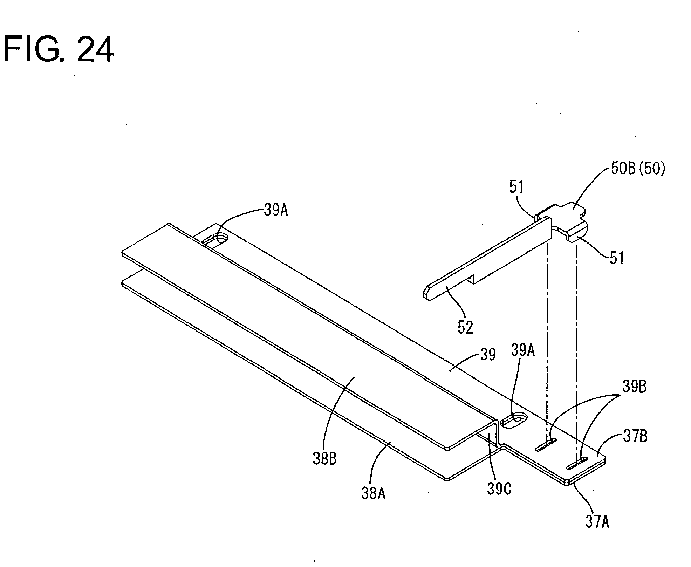

As shown in FIGS. 18 and 24, the detection terminal portion 50 separate from other members (e.g. terminal connecting portions 38A, 38B) is mounted into the terminal connection holes 39B formed by overlapping the held portion 39 of the first metal member 37A and that of the second metal member 37B. The detection terminal portion 50 has a function of detecting a state (e.g. voltage or temperature) of the electricity storage element 11.

As shown in FIGS. 18 and 24, the detection terminal portion 50 includes a pair of mounting pieces 51 to be inserted and mounted into the terminal connection holes 39B and a connecting portion 52 to be accommodated into the terminal accommodating portion 23 and electrically connected to the mating terminal. The detection terminal portion 50A mounted on the first connection member 36A and the detection terminal portion 50B mounted on the second connection member 36B differ in the position of the connecting portion 52. Note that the detection terminal portion 50C mounted on the external connection member 31A has the same shape as the detection terminal portion 50B mounted on the second connection member 36B.

The detection terminal portion 50 (detection terminal portion 50A, 50B, 50C) is obtained by pressing and bending a plate material (e.g. plate material made of copper or copper alloy) made of the same material as the mating terminal into a predetermined shape.

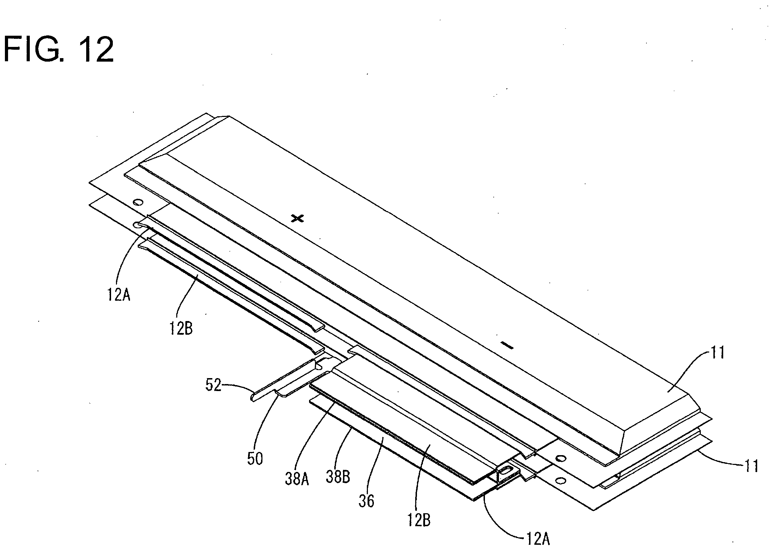

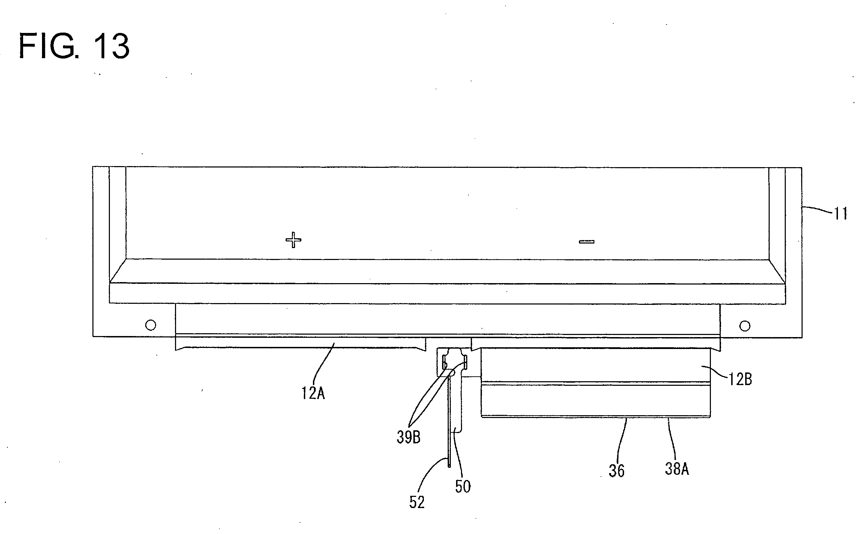

The detection terminal portion 50 is arranged at a position not in contact with the positive and negative lead terminals 12A, 12B of the electricity storage element 11 between the respective lead terminals 12A, 12B as shown in FIGS. 12 and 13. Note that the holding member 20 is not shown in FIGS. 12 and 13 to make the position of the detection terminal portion 50 easily understandable.

### (Third Holding Member 20C)

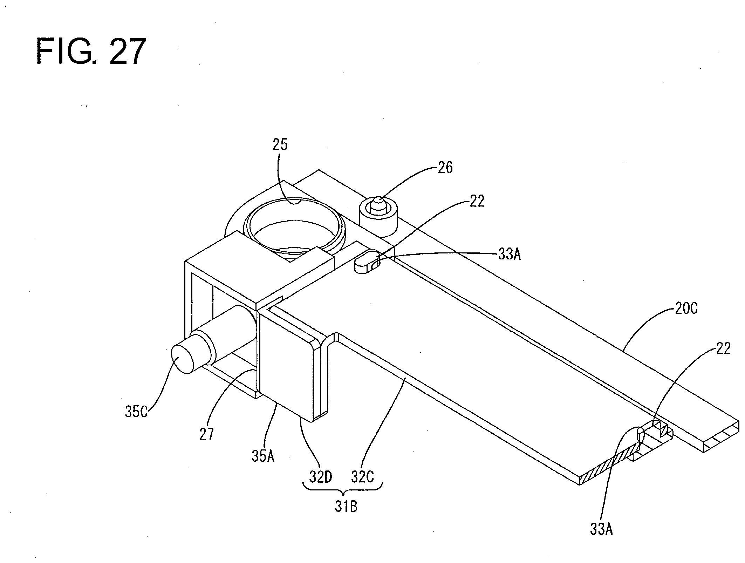

As shown in FIGS. 27, 28 and 35, the third holding member 20C is provided with the connection member holding portion 21 for holding the external connection member 31B on a shown left side and the connection member holding portion 21 for holding the first connection member 36A on a shown right side, the connection member holding portions 21 being connected via a step. The third holding member 20C is provided with a rectangular terminal holding portion 27 in which the external connection terminal 35C provided on the external connection member 31B is to be arranged.

The external connection member 31B mounted on the third holding member 20C functions as a positive electrode of the electricity storage module M1. The external connection member 31B functioning as a positive electrode is made of the same material (aluminum or aluminum alloy) as the positive-electrode lead terminal 12A. The external connection member 31B is formed by joining an L-shaped first metal member 32C and a second metal member 32D formed to be stepped. The first and second metal members 32C, 32D constituting the external connection member 31B are both made of aluminum or aluminum alloy.

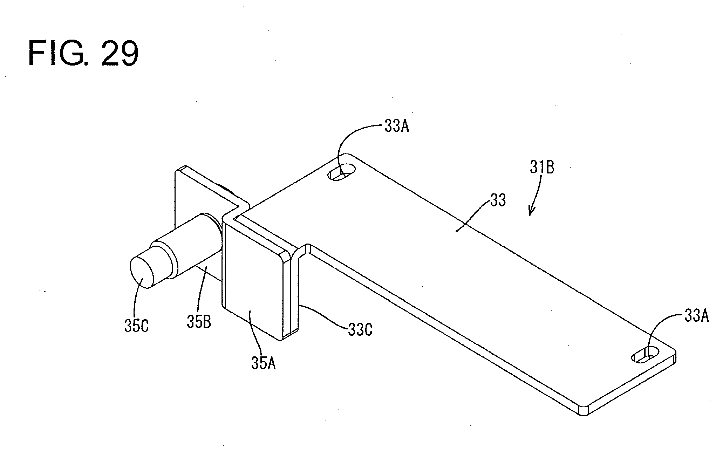

As shown in FIG. 29, the first metal member 32C includes a held portion 33 in the form of a flat plate, connected to the positive-electrode lead terminal 12A of the electricity storage element 11 and held on the third holding member 20C, and a wall portion 33C connected to the held portion 33 and hanging down substantially perpendicularly to the held portion 33. The second metal member 32D includes a joint portion 35A to be joined to the wall portion 33C and a terminal portion 35B formed with the external connection terminal 35C in the form of a bolt. The external connection terminal 35C is a terminal to be electrically connected to the external device.

Two holding holes 33A for receiving the holding protrusions 22 of the third holding member 20C are provided to penetrate through the held portion 33 of the external connection member 31B. Note that the first connection member 36A held on the third holding member 20C has the same configuration as the first connection member 36A held on the second holding member 20B.

### (Assembling Method of Electricity Storage Module M1)

Metal materials are pressed to fabricate the first metal members 32A, 32C, the second metal members 32B, 32D and the first and second metal members 37A, 37B, these are joined to fabricate each external connection member 31A, 31B, the first connection members 36A and the second connection member 36B.

Separately from the external connection members 31 and the connection members 36, metal materials are pressed and bent to fabricate the detection terminal portions 50A, 50B and 50C. When the mounting pieces 51 of the detection terminal portions 50A, 50B are respectively inserted and mounted into the terminal connection holes 39B of the first and second connection members 36A, 36B, the connection members 36 with the detection terminal portions 50 are obtained. Further, when the mounting pieces 51 of the detection terminal portion 50C are inserted and mounted into the terminal connection holes 33B of the external connection member 31A, the external connection member 31A with the detection terminal portion 50C is obtained.

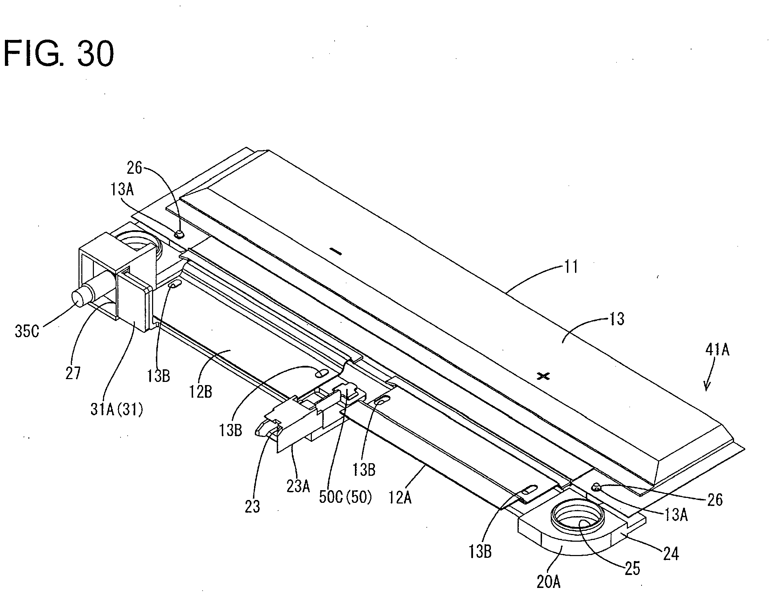

Subsequently, the holding protrusions 22 of the first holding member 20A are fitted into the holding holes 33A of the external connection member 31A with the detection terminal portion 50C and the terminal portion 35B of the external connection member 31A is fitted into the terminal holding portion 27 of the first holding member 20A, whereby the external connection member 31A is mounted on the first holding member 20A (see FIG. 9). Thereafter, the mounting protrusions 26 of the first holding member 20A are fitted into the mounting holes 13A of the electricity storage element 11 and the holding protrusions 22 of the first holding member 20A are fitted into the holding holes 13B of the lead terminal 12B, whereby an electricity storage unit 41A in the lowermost stage shown in FIG. 30 is obtained.

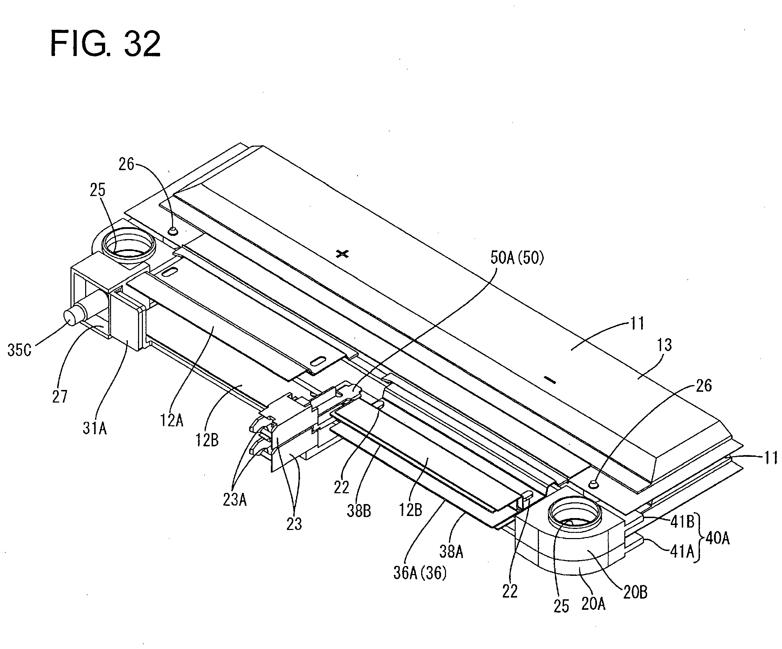

When the holding protrusions 22 of the second holding member 20B are fitted into the holding holes 33A of the first connection member 36A, the first connection member 36A is mounted on the second holding member 20B arranged in the second lowest stage and the second holding member 20B is placed (laminated) on the electricity storage unit 41A in the lowermost stage, a state shown in FIG. 31 is obtained. Subsequently, when the mounting protrusions 26 of the second holding member 20B are fitted into the mounting holes 13A of the electricity storage element 11 and the holding protrusions 22 of the second holding member 20B are fitted into the holding holes 13B of the lead terminal 12B, thereby laminating an electricity storage unit 41B in the second lowest stage on the electricity storage unit 41A in the lowermost stage, a laminated body 40A shown in FIG. 32 is obtained.

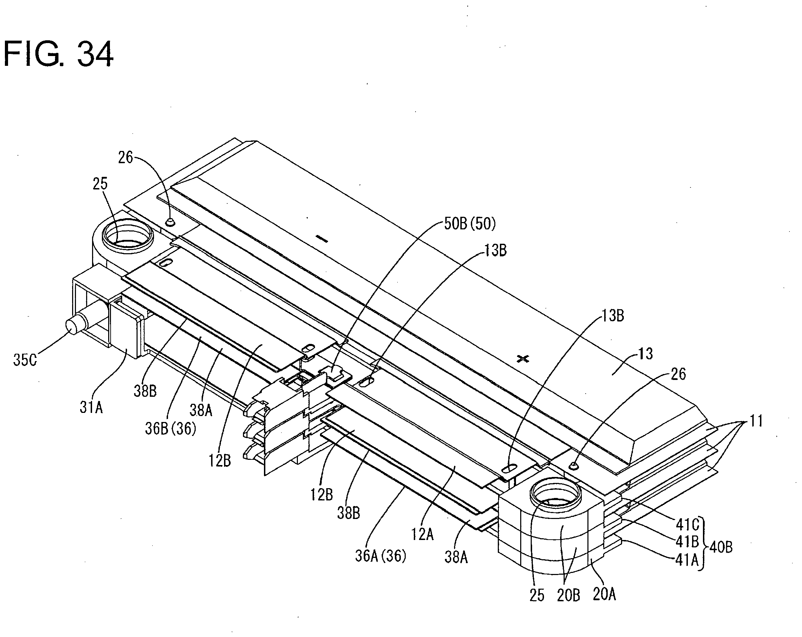

When the holding protrusions 22 of the second holding member 20B are fitted into the holding holes 33A of the second connection member 36B, the second connection member 36B is mounted on the second holding member 20B arranged in the third lowest stage and the second holding member 20B is placed (laminated) on the electricity storage unit 41B in the second lowest stage, a state shown in FIG. 33 is obtained. Subsequently, when the mounting protrusions 26 of the second holding member 20B are fitted into the mounting holes 13A of the electricity storage element 11, thereby laminating an electricity storage unit 41C in the third lowest stage on the electricity storage unit 41B in the second lowest stage, a laminated body 40B shown in FIG. 34 is obtained.

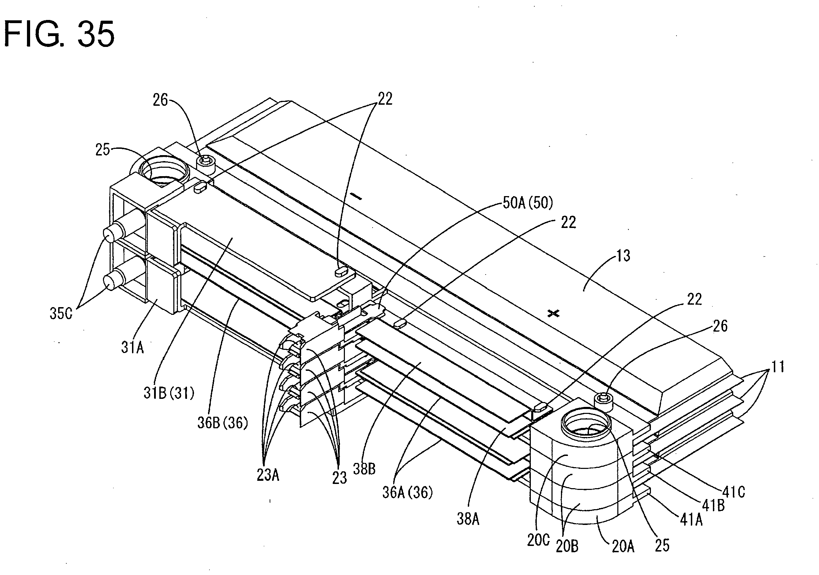

The holding protrusions 22 of the third holding member 20C are fitted into the holding holes 33A of the external connection member 31B and the terminal portion 35B of the external connection member 31B is fitted into the terminal holding portion 27 of the third holding member 20C, whereby the external connection member 31B is mounted on the third holding member 20C (see FIG. 27). Further, when the holding protrusions 22 of the third holding member 20C are fitted into the holding holes 33A of the first connection member 36A and the third holding member 20C is placed (laminated) on the electricity storage unit 41C in the third lowest stage, a state as shown in FIG. 35 is obtained. Subsequently, when the mounting protrusions 26 of the third holding member 20C are fitted into the mounting holes 13A of the electricity storage element 11, the holding protrusions 22 of the third holding member 20C are fitted into the holding holes 13B of the lead terminal 12B and an electricity storage unit 41D in the uppermost stage is laminated on the electricity storage unit 41C in the third lowest stage, a laminated body 40 shown in FIG. 4 is obtained.

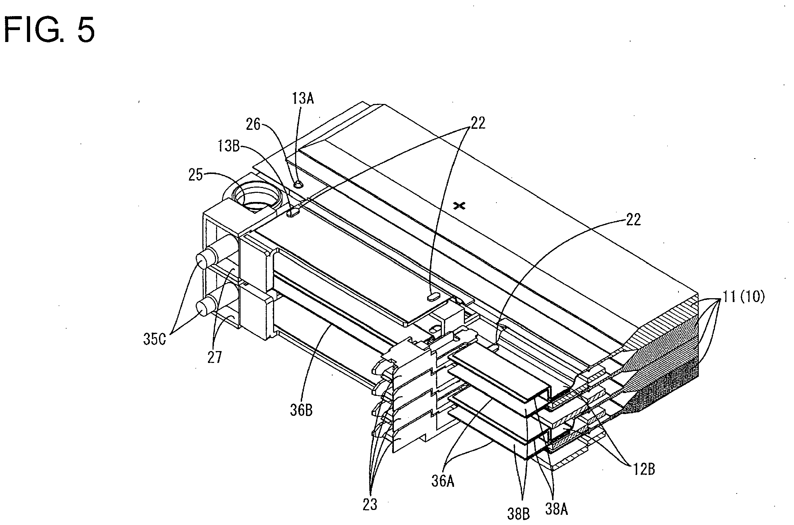

In the laminated body 40, as shown in FIGS. 5 and 6, the first metal member 37A of the first connection member 36A is in contact with the positive-electrode lead terminal 12A of the electricity storage element 11 arranged below and the second metal member 37B of the first connection member 36A is in contact with the negative-electrode lead terminal 12B of the electricity storage element 11 arranged above. The first metal member 37A of the second connection member 36B is in contact with the positive-electrode lead terminal 12A of the electricity storage element 11 arranged below and the second metal member 37B of the second connection member 36B is in contact with the negative-electrode lead terminal 12B of the electricity storage element 11 arranged above. The external connection member 31A held on the first holding member 20A is in contact with the negative-electrode lead terminal 12B and the external connection member 31B held on the third holding member 20C is in contact with the positive-electrode lead terminal 12A.

That is, each lead terminal 12A, 12B is in contact with the connection member 36 or the external connection member 31 made of the same material. In the laminated body 40, the four terminal accommodating portions 23 are arranged in a line in a vertical direction (lamination direction).

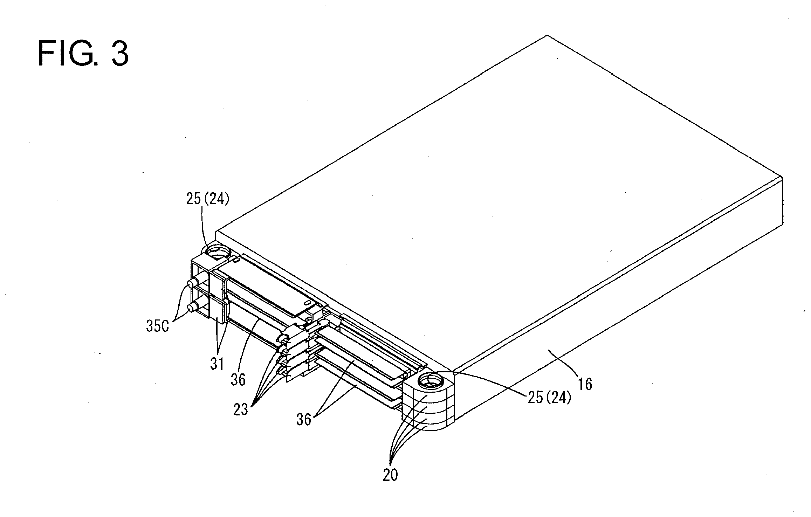

Subsequently, when the laminated body 40 is accommodated into the case main body 16, the electricity storage element group 10 is accommodated into the case main body 16 and the holding members 20 are partially exposed to outside as shown in FIG. 3. Subsequently, when the holding member cover 17 is mounted, the terminal accommodating portions 23 are arranged to project outwardly from the insertion portion 17A formed on the holding member cover 17 as shown in FIG. 2. Further, when the housing 18 is mounted to cover the terminal accommodating portions 23 arranged in a line, the electricity storage module M1 with the connector 19 shown in FIG. 1 is obtained.

### (Functions and Effects of Embodiment)

According to this embodiment, the connection member 36 for connecting the lead terminals 12A, 12B of the electricity storage elements 11 adjacent in the lamination direction is provided with the detection terminal portion 50 for detecting the state of the electricity storage element 11. Thus, the connection of the lead terminals 12A, 12B and the connection of the detection terminal portion 50 are completed by connecting the connection member 36 between the lead terminals 12A, 12B. As a result, according to this embodiment, it is possible to provide the electricity storage module M1 with a simplified connecting operation of the detection terminal portions 50.

Further, in this embodiment, the connection member 36 includes the terminal connecting portions 38A, 38B for electrically connecting the lead terminals 12A, 12B and the detection terminal portion 50 separate from the terminal connecting portions 38A, 38B is mounted on the connection member 36. Thus, the terminal connecting portions 38A, 38B and the detection terminal portion 50 can be made of different materials and the detection terminal portion 50 can be made of the same material as the mating terminal to be connected to the detection terminal portion 50. As a result, according to this embodiment, the occurrence of electrolytic corrosion in a connecting part of the detection terminal portion 50 and the mating terminal can be prevented.

In this embodiment, the connection member 36 includes two terminal connecting portions 38A, 38B to be respectively electrically connected to the lead terminals 12A, 12B of the electricity storage elements 11 adjacent in the lamination direction and the two terminal connecting portions 38A, 38B are arranged at a distance. Thus, according to this embodiment, in joining one terminal connecting portion 38A and the lead terminal 12A by laser welding, there is no influence of laser heat on the other terminal connecting portion 38A and no alloy phase is formed even if the two terminal connecting portions 38A, 38B are made of different metals.

Further, since a part (terminal connecting portion 38A, 38B) of the connection member 36 to be held in contact with the lead terminal 12A, 12B is made of the same material as the lead terminal 12A, 12B according to this embodiment, various welding methods can be adopted as a method for connecting the lead terminal 12A, 12B and the connection member 36 and, in addition, electrical connection reliability can be enhanced by suppressing the occurrence of electrolytic corrosion in a connecting part of the lead terminal 12A, 12B and the connection member 36.

Further, in this embodiment, the electricity storage module M1 includes the holding members 20 for holding the connection members 36 and the holding members 20 are provided with the terminal accommodating portions 23 for accommodating the detection terminal portions 50. As a result, according to this embodiment, the detection terminal portions 50 are insulation-protected by the terminal accommodating portions 23 of the holding members 20 and it is sufficient to insert and fit the mating terminals for connection to the external device into the detection terminal portions 50 accommodated in the terminal accommodating portions 23. Thus, a connecting operation of the detection terminal portions 50 and the external device can also be simplified.

### <Other Embodiments>

The present invention is not limited to the above described and illustrated embodiment. For example, the following embodiments are also included in the technical scope of the present invention.
(1) Although the connection member 36 provided with the detection terminal portion 50 separate from the terminal connecting portions 38A, 38B is shown in the above embodiment, a connection member may be such that a detection terminal portion is integrally provided with terminal connecting portions.
(2) Although the connection member 36 in which a part (terminal connecting portion 38A, 38B) to be held in contact with the lead terminal 12A, 12B is made of the same metal material as the lead terminal 12A, 12B is shown in the above embodiment, a connection member may be such that a part to be held in contact with a lead terminal is made of a material different from that of the lead terminal.
(3) Although the holding member provided with the terminal accommodating portion for accommodating the terminal connecting portion is shown in the above embodiment, a holding member may be provided with no terminal accommodating portion.
(4) Although a member formed by joining the first metal member 37A and the second metal member 37B is shown as the connection member 36 in the above embodiment, the connection member 36 may be composed of one member.
(5) Although a member formed by joining the first metal member 32A (32C) and the second metal member 32B (32D) is shown as the external connection member 31A (31B) in the above embodiment, the external connection member 31A (31B) may be composed of one member.
(6) Although the two metal members constituting the external connection member 31 are made of the same material in the above embodiment, the two metal members may be made of different materials.
(7) Although the electricity storage element group 10 formed by laminating four electricity storage elements 11 is shown in the above embodiment, the electricity storage element group 10 has only to be formed by laminating a plurality of electricity storage elements and may be formed by laminating two, three, five or more electricity storage elements.
(8) Although the holding member 20 formed with the terminal holding portion 27 for holding the external connection terminal is shown in the above embodiment, no terminal holding portion may be provided.

### List of Reference Signs

- 10 ...: electricity storage element group
- 11 ...: electricity storage element
- 12A ...: positive-electrode lead terminal
- 12B ...: negative-electrode lead terminal
- 18 ...: housing
- 18A ...: terminal insertion opening
- 19 ...: connector
- 20 ...: holding member
- 20A ...: first holding member
- 20B ...: second holding member
- 20C ...: third holding member
- 21 ...: connection member holding portion
- 23 ...: terminal accommodating portion
- 23A ...: opening
- 31A ...: external connection member
- 31B ...: external connection member
- 33 ...: held portion
- 33A, 39A ...: holding hole
- 33B, 39B ...: terminal connection hole
- 36 ...: connection member
- 36A ...: first connection member
- 36B ...: second connection member
- 37A ...: first metal member
- 37B ...: second metal member
- 38A, 38B ...: terminal connecting portion
- 39 ...: held portion
- 40 ...: laminated body
- 50 ...: detection terminal portion
- 50A ...: detection terminal portion of first connection member
- 50B ...: detection terminal portion of second connection member
- 50C ...: detection terminal portion of external connection member
- 51 ...: mounting piece
- 52 ...: connecting portion
- M1 ...: electricity storage module

## Claims

1. A connection member (36, 36A, 36B) for electrically connecting lead terminals (12A, 12B) of electricity storage elements (11) adjacent in a lamination direction out of an electricity storage element group (10) formed by laminating a plurality of electricity storage elements (11) each including a positive-electrode and a negative-electrode lead terminals (12A, 12B) projecting in an outward direction from one side edge, comprising:
two terminal connecting portions (38A, 38B) to be arranged at a distance in the lamination direction and to be connected to the lead terminals (12A, 12B) adjacent in the lamination direction, respectively,
wherein:
one lead terminal (12A) of the positive-electrode and the negative electrode lead terminals (12A, 12B) of either one of the electricity storage elements (11) adjacent in the lamination direction is to be electrically connected to one of the two terminal connecting portions (38A, 38B); and
the other lead terminal (12B) of the positive-electrode and the negative electrode lead terminals (12A, 12B) of the other of the electricity storage elements (11) adjacent in the lamination direction is to be electrically connected to the other of the two terminal connecting portions (38A, 38B),
**characterized by**
a detection terminal portion (50, 50A, 50B) for detecting a state of the electricity storage element (11).

2. A connection member (36, 36A, 36B) according to claim 1, wherein the detection terminal portion (50, 50A, 50B) separate from the terminal connecting portion (38A, 38B) is mounted on the connection member (36, 36A, 36B).

3. A connection member (36, 36A, 36B) according to claim 1 or 2, wherein a part to be held in contact with the lead terminal (12A, 12B) is made of the same metal material as the lead terminal (12A, 12B).

4. An electricity storage module (M1), comprising:
an electricity storage element group (10) formed by laminating a plurality of electricity storage elements (11) each including a positive-electrode and a negative-electrode lead terminals (12A, 12B) projecting in an outward direction from one side edge; and
a connection member (36, 36A, 36B) according to any one of claims 1 to 3.

5. An electricity storage module (M1) according to claim 4, further comprising a holding member (20, 20A, 20B) mounted on one side edge of the electricity storage element (11) for holding the connection member (36, 36A, 36B), wherein:
the holding member (20, 20A, 20B) is provided with a terminal accommodating portion for accommodating the detection terminal portion (50, 50A, 50B).

## Patentansprüche

1. Ein Verbindungselement (36, 36A, 36B) zum elektrischen Verbinden von Leiteranschlüssen (12A, 12B) von in einer Schichtungsrichtung benachbarten Stromspeicherelementen (11) aus einer Stromspeicherelementgruppe (10), die durch Schichten einer Vielzahl von Stromspeicherelementen (11) gebildet ist, die jeweils Leiteranschlüsse (12A, 12B) mit einer positiven Elektrode und einer negativen Elektrode beinhalten, die von einer Seitenkante ausgehend nach außen vorstehen, umfassend:
zwei Anschlussverbindungsabschnitte (38A, 38B), die in Schichtungsrichtung beabstandet anzuordnen und mit den jeweils in Schichtungsrichtung benachbarten Leiteranschlüssen (12A, 12B) zu verbinden sind,
wobei:
ein Leiteranschluss (12A) der Leiteranschlüsse (12A, 12B) mit positiver Elektrode und negativer Elektrode von irgendeinem der in Schichtungsrichtung benachbarten Stromspeicherelemente (11) elektrisch zu verbinden ist mit einem der beiden Anschlussverbindungsabschnitte (38A, 38B); und wobei
der andere Leiteranschluss (12B) der Leiteranschlüsse (12A, 12B) mit positiver Elektrode und negativer Elektrode des anderen der in Schichtungsrichtung benachbarten Stromspeicherelemente (11) elektrisch zu verbinden ist mit dem anderen der beiden Anschlussverbindungsabschnitte (38A, 38B),
**gekennzeichnet durch**
einen Detektions-Anschlussabschnitt (50, 50A, 50B) zum Erfassen eines Zustands des Stromspeicherelements (11).

2. Ein Verbindungselement (36, 36A, 36B) nach Anspruch 1, wobei der vom Anschlussverbindungsabschnitt (38A, 38B) getrennte Detektions-Anschlussabschnitt (50, 50A, 50B) am Verbindungselement (36, 36A, 36B) montiert ist.

3. Ein Verbindungselement (36, 36A, 36B) nach Anspruch 1 oder 2, wobei ein mit dem Leiteranschluss (12A, 12B) in Kontakt zu haltendes Teil aus dem gleichen metallischen Material wie der Leiteranschluss (12A, 12B) besteht.

4. Ein Stromspeichermodul (M1), das Folgendes umfasst:
eine Gruppe (10) von Stromspeicherelementen, die durch Schichten einer Vielzahl von Stromspeicherelementen (11) gebildet wird, die jeweils einen Leiteranschluss mit positiver Elektrode und einen mit negativer Elektrode (12A, 12B) beinhalten, die von einer Seitenkante ausgehend nach außen vorstehen; und
ein Verbindungselement (36, 36A, 36B) nach irgendeinem der Ansprüche von 1 bis 3.

5. Ein Stromspeichermodul (M1) nach Anspruch 4, ferner umfassend ein Halteelement (20, 20A, 20B), das an einer Seitenkante des Stromspeicherelements (11) montiert ist, um das Verbindungselement (36, 36A, 36B) zu halten, wobei:
das Halteelement (20, 20A, 20B) mit einem Anschluss-Aufnahmeabschnitt versehen ist, zum Aufnehmen des Detektions-Anschlussabschnitts (50, 50A, 50B).

## Revendications

1. Un élément de connexion (36, 36A, 36B) pour connecter électriquement des bornes de conducteur (12A, 12B) d'éléments de stockage d'électricité (11) adjacents dans une direction de stratification parmi un groupe d'éléments de stockage d'électricité (10) formé en stratifiant plusieurs éléments de stockage d'électricité (11) dont chacun inclut une borne de conducteur à électrode positive et une borne de conducteur à électrode négative (12A, 12B) saillant dans une direction extérieure depuis un bord latéral, comprenant :
deux parties de connexion de bornes (38A, 38B) à disposer à distance dans la direction de stratification et à connecter aux bornes de conducteur (12A, 12B) adjacentes dans la direction de stratification,
sachant que :
une borne de conducteur (12A) des bornes de conducteur à électrode positive et à électrode négative (12A, 12B) de l'un ou l'autre des éléments de stockage d'électricité (11) adjacents dans la direction de stratification est à connecter électriquement à l'une parmi les deux parties de connexion de borne (38A, 38B) ; et que
l'autre borne de conducteur (12B) des bornes de conducteur à électrode positive et à électrode négative (12A, 12B) de l'autre des éléments de stockage d'électricité (11) adjacents dans la direction de stratification est à connecter électriquement à l'autre parmi les deux parties de connexion de borne (38A, 38B),
**caractérisé par**
une partie de borne de détection (50, 50A, 50B) pour détecter un état de l'élément de stockage d'électricité (11).

2. Un élément de connexion (36, 36A, 36B) d'après la revendication 1, sachant que la partie de borne de détection (50, 50A, 50B) séparée de la partie de connexion de borne (38A, 38B) est montée sur l'élément de connexion (36, 36A, 36B).

3. Un élément de connexion (36, 36A, 36B) d'après la revendication 1 ou 2, sachant qu'une partie destinée à être maintenue en contact avec la borne de conducteur (12A, 12B) est réalisée dans le même matériau métallique que la borne de conducteur (12A, 12B).

4. Un module de stockage d'électricité (M1), comprenant :
un groupe d'éléments de stockage d'électricité (10) formé en stratifiant une pluralité d'éléments de stockage d'électricité (11) dont chacun comprend une borne de conducteur à électrode positive et une borne de conducteur à électrode négative (12A, 12B) faisant saillie dans une direction extérieure depuis un bord latéral ; et
un élément de connexion (36, 36A, 36B) d'après l'une quelconque des revendications de 1 à 3.

5. Un module de stockage d'électricité (M1) d'après la revendication 4, comprenant en outre un élément de maintien (20, 20A, 20B) monté sur un bord latéral de l'élément de stockage d'électricité (11) pour maintenir l'élément de connexion (36, 36A, 36B), sachant que :
l'élément de maintien (20, 20A, 20B) est muni d'une partie de logement de borne pour loger la partie de borne de détection (50, 50A, 50B).
